# EUROPÄISCHE PATENTSCHRIFT

(11) **EP 4 397 509 B1**
(45) Veröffentlichungstag und Bekanntmachung des Hinweises auf die Patenterteilung: **14.10.2026**
(21) Anmeldenummer: 23217868.1
(22) Anmeldetag: 19.12.2023
(51) Int. Cl.: B60C 23/04

(54) **VERFAHREN ZUM ZUORDNEN VON REIFENDRUCKÜBERWACHUNGSEINHEITEN ZU DEN RADPOSITIONEN EINES FAHRZEUGS**
METHOD FOR ASSIGNING TYRE PRESSURE MONITORING UNITS TO THE WHEEL POSITIONS OF A VEHICLE
PROCÉDÉ D'ATTRIBUTION D'UNITÉS DE SURVEILLANCE DE PRESSION DE PNEU À DES POSITIONS DE ROUES D'UN VÉHICULE

(30) Priorität: 05.01.2023 DE 102023100230
(43) Veröffentlichungstag der Anmeldung: 10.07.2024
(73) Patentinhaber: Huf Baolong Electronics Bretten GmbH, 75015 Bretten (DE)
(72) Erfinder: Kessler, Ralf, 76327 Pfinztal (DE); Vögeli, Patrick, 76356 Weingarten (DE); Wagner, Markus, 75038 Flehingen (DE)
(74) Vertreter: Twelmeier Mommer & Partner

(56) Entgegenhaltungen:
- US-A1- 2017 282 654
- US-A1- 2020 384 815
- US-A1- 2022 324 272
- US-B2- 7 168 306

## Beschreibung

Die Erfindung betrifft ein Verfahren zum Zuordnen von Reifendrucküberwachungseinheiten eines Reifendrucküberwachungssystems eines Fahrzeugs zu den verschiedenen Positionen, an denen jeweils ein Rad an dem Fahrzeug montiert ist, und geht dabei von einem Zuordnungsverfahren mit den im Oberbegriff des Anspruchs 1 angegebenen Merkmalen aus, wie es aus US 7 168 306 B2 bekannt ist. Ähnliche Verfahren sind aus DE 10 2008 045 867 A1, US 2017/282654 A1, KR 101 673 771 B1 und US2022/324272 A1 bekannt.

In den Luftreifen eines Fahrzeugs angeordnete Reifendrucküberwachungseinheiten senden Druckdaten jeweils zusammen mit einer charakteristischen Kennung aus, die es einer ortsfest am Fahrzeug angeordneten Zentraleinheit ermöglicht, die Reifendrucküberwachungseinheiten und damit die von ihnen übermittelten Druckdaten den einzelnen Rädern des Fahrzeugs zuzuordnen. Da die Reifen eines Fahrzeugs und damit die in ihnen angeordneten Reifendrucküberwachungseinheiten vertauscht oder ausgewechselt werden können, muss die Zentraleinheit nach jedem Fahrtbeginn erneut eine Zuordnung der charakteristischen Kennungen zu den jeweiligen Radpositionen vornehmen. Diese Zuordnung kann mittels einer statistischen Auswertung des Empfangspegels vorgenommen werden. Signale von Reifendrucküberwachungseinheiten in Fahrzeugreifen, die näher an einem Empfänger der Auswerteeinheit angeordnet sind, werden nämlich im zeitlichen Mittel mit einem größeren Empfangspegel empfangen als Signale von Reifendrucküberwachungseinheiten in weiter entfernten Fahrzeugreifen.

Damit die Zentraleinheit Reifendrucküberwachungseinheiten zuverlässig einer Radposition zuordnen kann, muss bei herkömmlichen Reifendrucküberwachungssystemen unter Umständen eine sehr hohe Anzahl von Sendungen empfangen werden, bevor eine aussagekräftige statistische Auswertung möglich ist.

Aufgabe der Erfindung ist es deshalb, ein Weg aufzuzeigen, wie bei einem System zur Überwachung des Reifendrucks in Fahrzeugen die Anzahl der Sendungen reduziert werden kann, die für eine Zuordnung von Reifendrucküberwachungseinheiten zu den einzelnen Radpositionen des Fahrzeugs nötig ist.

Diese Aufgabe wird durch ein Verfahren mit den im Anspruch 1 angegebenen Merkmalen gelöst. Vorteilhafte Weiterbildungen der Erfindung sind Gegenstand von Unteransprüchen.

Bei einem erfindungsgemäßen Verfahren berücksichtigt die Zentraleinheit bei der Zuordnung der Reifendrucküberwachungseinheiten zu den einzelnen Radpositionen des Fahrzeugs zusätzlich zu den Empfangspegeln empfangener Sendungen auch die Sendleistung, mit der die betreffende Sendung ausgesandt wurde. Wenn sowohl Sendeleistung als auch Empfangspegel bekannt sind, lässt sich daraus nämlich eine Information über den Abstand von Sender und Empfänger ermitteln, was die Zuordnung vereinfacht. Beispielsweise ist der Abstand zwischen Sender und Empfänger statistischen Mittel näherungsweise proportional zu √(p_{S}/p_{E}, wobei p_{S} die Sendeleistung und p_{E} der Empfangspegel ist. Wenn in die Auswertung der Empfangspegel auch die Sendeleistungen mit einbezogen werden, lässt sich somit eine Information über die Abstände der einzelnen Reifendrucküberwachungseinheiten zu dem Empfänger oder den Empfängern ermitteln, was Zuordnung der Reifendrucküberwachungseinheiten zu den einzelnen Radpositionen erleichtert.

Erfindungsgemäß wird die Sendeleistung in einer Sendung, beispielsweise einem Datentelegramm, ausdrücklich angegeben.

Eine vorteilhafte Weiterbildung der Erfindung sieht vor, dass die Reifendrucküberwachungseinheiten Sendungen mit unterschiedlichen Sendeleistungen aussenden, beispielsweise Sendeleistungen die sich um einen Faktor von 2 oder mehr unterscheiden. Auf diese Weise lässt sich noch genauer durch Auswertung von Sendeleistungen und Empfangspegeln ermitteln, wie groß der Abstand zwischen Sender und Empfänger ist, da der Empfangspegel eine nicht-lineare Funktion der Sendeleistung ist. In der Regel ist das Verhältnis zwischen Empfangspegel und Sendeleistung invers proportional zum Quadrat des Abstands zwischen Empfänger und Sender, wobei dieser Zusammenhang durch Abschattungs- und Reflexionseffekte beeinträchtigt werden kann.

Dabei ist möglich, dass die einzelnen Reifendrucküberwachungseinheiten selbsttätig ihre Sendeleistungen variieren und die jeweilige Sendeleistung in jeder Sendung angeben. In der Regel ist es aber effizienter, wenn die Zentraleinheit mit den Reifendrucküberwachungseinheiten kommuniziert und Reifendrucküberwachungseinheiten nach Empfang einer Sendung anweist, die Sendeleistung zu ändern, insbesondere wenn die Zentraleinheit jeweils vorgibt, mit welcher Sendeleistung eine Reifendrucküberwachungseinheit senden soll. Auf diese Weise kann die Zentraleinheit beispielsweise veranlassen, dass nur jene Reifendrucküberwachungseinheiten, die noch nicht einer Radposition zugeordnet sind, mit vorübergehend erhöhten Sendeleistungen senden, beispielsweise einem um einen Faktor 2 oder mehr, insbesondere einem Faktor 4 oder mehr erhöhten Sendeleistung senden. Sobald eine Reifendrucküberwachungseinheit einer Radposition zugeordnet ist, kann die Zentraleinheit dieser Reifendrucküberwachungseinheit eine minimale Sendeleistung vorgeben, die für einen zuverlässigen Empfang ausreicht.

Grundsätzlich genügt es für ein erfindungsgemäßes Verfahren, wenn die Zentraleinheit an einen einzigen Empfänger angeschlossen ist, der zu den einzelnen Radpositionen unterschiedlichen Abstand hat. Allerdings lässt sich mit einem erfindungsgemäßen Verfahren, umso schneller eine Zuordnung vornehmen, je mehr Empfänger genutzt werden, an denen jeweils Empfangspegel erfasst werden können. Moderne Fahrzeuge mit elektronischen Schließanlagen haben in der Regel mehrere Empfänger für Signale eines Funkschlüssels. Diese Empfänger können in einem erfindungsgemäßen Verfahren vorteilhaft auch zum Empfang von Sendungen von Reifendrucküberwachungseinheiten genutzt werden. Um zusätzlichen Hardwareaufwand zu vermeiden, können als Empfänger zusätzlich auch ein Smartphone und/oder ein Funkschlüssel des Fahrers verwendet werden.

Eine weitere vorteilhafte Weiterbildung der Erfindung sieht vor, dass die einzelnen Reifendrucküberwachungseinheiten als zusätzliche Empfänger genutzt werden. Indem die einzelnen Reifendrucküberwachungseinheiten der Zentraleinheit jeweils mitteilen, mit welchem Empfangspegel sie Sendungen anderer Reifendrucküberwachungseinheiten empfangen haben, kann die Zentraleinheit noch schneller eine Zuordnung vornehmen. Empfangspegel, mit denen die Reifendrucküberwachungseinheiten jeweils Sendungen anderer Reifendrucküberwachungseinheiten empfangen haben, enthalten nämlich, insbesondere in Kombination mit der jeweils dazugehörenden Sendleistung, eine Information über den Abstand der betreffenden Reifendrucküberwachungseinheiten voneinander.

Eine weitere vorteilhafte Weiterbildung der Erfindung sieht vor, dass die Zentraleinheit mittels Bluetooth mit den Reifendrucküberwachungseinheiten kommuniziert, insbesondere nach dem Industriestandard Bluetooth low energy.

Eine weitere vorteilhafte Weiterbildung der Erfindung sieht vor, dass die Zentraleinheit bei der Zuordnung charakteristischer Kennungen zu den Positionen, an denen jeweils ein Rad an dem Fahrzeug montiert ist, auch eine "Time-of-Flight" Auswertung vornimmt.

Eine "Time-of-Flight" Auswertung kann dabei im Rahmen einer bidirektionalen Kommunikation vorgenommen werden und als "Time-of-Flight" die Zeit erfasst werden, die vom Aussenden eines Signals der Zentraleinheit bis zum Empfang eins Antwortsignals der angesprochenen Reifendrucküberwachungseinheit vergeht. Eine andere Möglichkeit besteht darin, dass die Zeit vom Aussenden eines Signals bis zu seinem Empfang gemessen und als "Time-of-Flight" ausgewertet wird. Dazu wird eine Synchronisierung der Uhren von Reifendrucküberwachungseinheit und Zentraleinheit vorgenommen. Beispielsweise kann dann die Zentraleinheit der Reifendrucküberwachungseinheit genau vorschreiben, zu welchem Zeitpunkt eine Sendung begonnen werden soll, oder die Reifendrucküberwachungseinheit gibt in der Sendung, die genaue Zeit an, zu der mit dem Aussenden der Sendung begonnen wurde.

Durch eine "Time-of-Flight" Auswertung erhält die Zentraleinheit somit eine Information über den Abstand zwischen Reifendrucküberwachungseinheit und dem Empfänger bzw. den Empfängern der Zentraleinheit. Die Genauigkeit dieser Information lässt sich durch statistische Auswertung verbessern.

Eine weitere vorteilhafte Weiterbildung der Erfindung sieht vor, dass die Zentraleinheit bei der Zuordnung charakteristischer Kennungen zu den Positionen, an denen jeweils ein Rad an dem Fahrzeug montiert ist, auch eine "angle-of-arrival" Auswertung vornimmt. Bei einer "angle-of-arrival" Auswertung wird die Richtung eines eingehenden Signals ermittelt, indem eine Phasenverschiebung ausgewertet wird, die zwischen verschiedenen Antennen auftritt, welche dieselbe Sendung empfangen. Auf diese Weise lässt sich die Zuordnung von Reifendrucküberwachungseinrichtungen zu Radpositionen eines Fahrzeugs noch weiter beschleunigen.

## Patentansprüche

1. Verfahren zum Zuordnen von Reifendrucküberwachungseinheiten eines Reifendrucküberwachungssystems eines Fahrzeugs zu den verschiedenen Positionen, an denen jeweils ein Rad an dem Fahrzeug montiert ist,
die Reifendrucküberwachungseinheiten jeweils einen Drucksensor, einen Empfänger und einen Sender enthalten,
der Sender aus Messungen des Drucksensors gewonnene Daten zusammen mit einer charakteristischen Kennung der Reifendrucküberwachungseinheit aussendet,
das Reifendrucküberwachungssystem eine Zentraleinheit enthält, die Sendungen der Reifendrucküberwachungseinheiten empfängt und durch Auswertung von Empfangspegeln die charakteristischen Kennungen der verschiedenen Reifendrucküberwachungseinheiten jeweils einer der Positionen zuordnet, in denen jeweils ein Rad an dem Fahrzeug montiert ist,
wobei die Zentraleinheit bei der Auswertung von Empfangspegeln auch die Sendeleistung berücksichtigt, mit der die empfangenen Sendungen ausgesandt wurden, **dadurch gekennzeichnet, dass** die Sendungen der Reifendrucküberwachungseinheiten jeweils angeben, mit welcher Sendeleistung diese Sendung ausgesendet wurde.

2. Verfahren nach Anspruch 1, **dadurch gekennzeichnet, dass** die Reifendrucküberwachungseinheiten Sendungen mit unterschiedlicher Sendeleistung aussenden.

3. Verfahren nach einem der vorstehenden Ansprüche, **dadurch gekennzeichnet, dass** die Zentraleinheit eine oder mehrere Reifendrucküberwachungseinheiten nach Empfang einer Sendung anweist, die Sendeleistung zu ändern.

4. Verfahren nach Anspruch 3, **dadurch gekennzeichnet, dass** die Zentraleinheit vorgibt, auf welchen Wert die Sendeleistung geändert werden soll.

5. Verfahren nach einem der vorstehenden Ansprüche, **dadurch gekennzeichnet, dass** die Zentraleinheit mehrere Empfänger aufweist, mit denen sie Sendungen von Reifendrucküberwachungseinheiten empfängt.

6. Verfahren nach einem der vorstehenden Ansprüche, **dadurch gekennzeichnet, dass** die Reifendrucküberwachungseinheiten der Zentraleinheit mitteilen, mit welchem Empfangspegel sie Sendungen anderer Reifendrucküberwachungseinheiten empfangen haben.

7. Verfahren nach einem der vorstehenden Ansprüche, **dadurch gekennzeichnet, dass** Zentraleinheit bei der Zuordnung charakteristischer Kennungen zu den Positionen, an denen jeweils ein Rad an dem Fahrzeug montiert ist, auch eine "Time-of-Flight" Auswertung vornimmt.

8. Verfahren nach Anspruch 7, **dadurch gekennzeichnet, dass** die Reifendrucküberwachungseinheiten und die Zentraleinheit ihre jeweiligen Uhren synchronisieren.

9. Verfahren nach einem der vorstehenden Ansprüche, **dadurch gekennzeichnet, dass** die Zentraleinheit bei der Zuordnung charakteristischer Kennungen zu den Positionen, an denen jeweils ein Rad an dem Fahrzeug montiert ist, auch eine "angle-of-arrival" Auswertung vornimmt.

10. Verfahren nach einem der vorstehenden Ansprüche, **dadurch gekennzeichnet, dass** die Zentraleinheit mittels Bluetooth mit den Reifendrucküberwachungseinheiten kommuniziert.

## Claims

1. Method for assigning tyre pressure monitoring units of a vehicle's tyre pressure monitoring system to the various positions at which a wheel is mounted on the vehicle,
the tyre pressure monitoring units each comprising a pressure sensor, a receiver and a transmitter,
the transmitter transmits data obtained from measurements by the pressure sensor together with a characteristic identifier of the tyre pressure monitoring unit, the tyre pressure monitoring system comprises a central processing unit which receives transmissions from the tyre pressure monitoring units and, by evaluating reception levels, assigns the characteristic identifiers of the various tyre pressure monitoring units to one of the positions at which a wheel is mounted on the vehicle,
wherein, when evaluating reception levels, the central processing unit also takes into account the transmission power at which the received transmissions were sent, **characterised in that** the transmissions from the tyre pressure monitoring units each specify the transmission power at which that transmission was sent.

2. Method according to claim 1, **characterised in that** the tyre pressure monitoring units transmit signals with different transmission powers.

3. Method according to one of the preceding claims, **characterised in that** the central unit instructs one or more tyre pressure monitoring units to change the transmission power upon receipt of a transmission.

4. Method according to claim 3, **characterised in that** the central unit specifies the value to which the transmission power is to be changed.

5. Method according to any one of the preceding claims, **characterised in that** the central unit comprises a plurality of receivers with which it receives transmissions from tyre pressure monitoring units.

6. Method according to any one of the preceding claims, **characterised in that** the tyre pressure monitoring units inform the central unit of the reception level at which they have received transmissions from other tyre pressure monitoring units.

7. Method according to any one of the preceding claims, **characterised in that**, when assigning characteristic identifiers to the positions at which a wheel is mounted on the vehicle, the central unit also performs a 'time-of-flight' evaluation.

8. Method according to claim 7, **characterised in that** the tyre pressure monitoring units and the central unit synchronise their respective clocks.

9. Method according to any one of the preceding claims, **characterised in that**, when assigning characteristic identifiers to the positions at which a wheel is mounted on the vehicle, the central unit also performs an 'angle-of-arrival' evaluation.

10. Method according to any one of the preceding claims, **characterised in that** the central unit communicates with the tyre pressure monitoring units via Bluetooth.

## Revendications

1. Procédé d'attribution d'unités de surveillance de pression de pneu d'un système de surveillance de pression de pneu d'un véhicule aux différentes positions auxquelles une roue est respectivement montée sur le véhicule,
les unités de surveillance de pression de pneu comprenant chacune un capteur de pression, un récepteur et un émetteur,
l'émetteur transmet des données issues des mesures du capteur de pression ainsi qu'un identifiant caractéristique de l'unité de surveillance de pression de pneu,
le système de surveillance de pression de pneu comprend une unité centrale qui reçoit les transmissions des unités de surveillance de pression de pneu et, en analysant les niveaux de réception, attribue les identifiants caractéristiques des différentes unités de surveillance de pression de pneu à l'une des positions où une roue est montée sur le véhicule,
l'unité centrale tenant également compte, lors de l'évaluation des niveaux de réception, de la puissance d'émission avec laquelle les transmissions reçues ont été émises, **caractérisé en ce que** les transmissions émises par les unités de surveillance de pression de pneu indiquent chacun la puissance d'émission avec laquelle cette transmission a été émise.

2. Procédé selon la revendication 1, **caractérisé en ce que** les unités de surveillance de pression de pneu émettent des transmissions avec des puissances d'émission différentes.

3. Procédé selon l'une des revendications précédentes, **caractérisé en ce que** l'unité centrale ordonne à une ou plusieurs unités de surveillance de pression de pneu, après réception d'une transmission, de modifier la puissance d'émission.

4. Procédé selon la revendication 3, **caractérisé en ce que** l'unité centrale spécifie la valeur à laquelle la puissance d'émission doit être modifiée.

5. Procédé selon l'une des revendications précédentes, **caractérisé en ce que** l'unité centrale comporte plusieurs récepteurs avec lesquels elle reçoit des transmissions provenant d'unités de surveillance de pression de pneu.

6. Procédé selon l'une des revendications précédentes, **caractérisé en ce que** les unités de surveillance de pression de pneu communiquent à l'unité centrale le niveau de réception auquel elles ont reçu les transmissions d'autres unités de surveillance de pression de pneu.

7. Procédé selon l'une des revendications précédentes, **caractérisé en ce que** l'unité centrale, lors de l'attribution d'identifiants caractéristiques aux positions auxquelles une roue est respectivement montée sur le véhicule, effectue également une analyse par « Time-of-Flight ».

8. Procédé selon la revendication 7, **caractérisé en ce que** les unités de surveillance de pression de pneu et l'unité centrale synchronisent leurs horloges respectives.

9. Procédé selon l'une des revendications précédentes, **caractérisé en ce que** l'unité centrale, lors de l'attribution d'identifiants caractéristiques aux positions auxquelles une roue est respectivement montée sur le véhicule, effectue également une analyse de « angle-of-arrival ».

10. Procédé selon l'une des revendications précédentes, **caractérisé en ce que** l'unité centrale communique avec les unités de surveillance de pression de pneu via Bluetooth.
